# EUROPÄISCHE PATENTSCHRIFT

(11) **EP 2 741 880 B1**
(45) Veröffentlichungstag und Bekanntmachung des Hinweises auf die Patenterteilung: **11.05.2016**
(21) Anmeldenummer: 12756075.3
(22) Anmeldetag: 09.08.2012
(51) Int. Cl.: B23B 5/12, B23Q 1/00, B23Q 11/10, B24B 39/02, B23P 23/04, B23B 41/12, B23B 29/034, B23B 43/02

(54) **VERFAHREN ZUM HERSTELLEN EINER ZYLINDEREINHEIT UND DREHMASCHINE ZUM DURCHFÜHREN DES VERFAHRENS**
METHOD FOR PRODUCING A CYLINDER UNIT AND LATHE FOR CARRYING OUT THE METHOD
PROCÉDÉ DE FABRICATION D'UN ENSEMBLE CYLINDRE ET TOUR POUR EXÉCUTER LE PROCÉDÉ

(30) Priorität: 11.08.2011 DE 102011110044
(43) Veröffentlichungstag der Anmeldung: 18.06.2014
(73) Patentinhaber: Ecoroll AG, Werkzeugtechnik, 29227 Celle (DE)
(72) Erfinder: OSTERTAG, Alfred, 29229 Celle (DE)
(74) Vertreter: Plöger, Jan Manfred
(86) Internationale Anmeldenummer: PCT/DE2012/000802
(87) Internationale Veröffentlichungsnummer: WO 2013/020547

(56) Entgegenhaltungen:
- EP-A1- 1 153 683
- DD-B1- 228 757
- DE-A- 2 723 622
- DE-A1- 3 116 596
- DE-A1- 3 721 610
- DE-A1- 19 521 219
- DE-A1- 19 613 897
- GB-A- 748 620
- US-A- 3 559 258
- US-A- 4 184 794

## Beschreibung

Die Erfindung betrifft ein Verfahren zum Herstellen einer Zylindereinheit mit den Schritten (a) Spannen eines Zylinders an einer Werkstoffspannvorrichtung einer Drehmaschine, (b) Schälen einer Zylinder-Innenfläche des Zylinders mittels eines Schälwerkzeugs, insbesondere durch Rotation der Werkstückspannvorrichtung, so dass eine geschälte Zylinder-Innenfläche entsteht, (c) Glattwalzen der geschälten Zylinder-Innenfläche mittels eines Walzwerkzeugs durch Rotation der Werkstückspannvorrichtung und (d) Bearbeiten zumindest einer Stirnfläche der Zylindereinheit.

Gemäß einem zweiten Aspekt betrifft die Erfindung eine Drehmaschine zum Durchführen eines solchen Verfahrens mit (i) einer Spindel, (ii) einer Werkstückspannvorrichtung, die von der Spindel antreibbar und ausgebildet ist zum Spannen einer Zylindereinheit, so dass die Zylindereinheit um eine Zylinder-Längsachse drehbar ist, und (iii) einem Schlitten zum Positionieren eines Spanwerkzeugs auf eine vorgebbare Position relativ zu der Werkstückspannvorrichtung, so dass zumindest eine Stirnseite der Zylindereinheit bearbeitbar ist.

Zylindereinheiten, worunter insbesondere hydraulische und pneumatische Zylindereinheiten verstanden werden, werden insbesondere im Fahrzeugbau in weitem Umfang eingesetzt. Durch Zuführen von Druckfluid zur Zylindereinheit wird ein Kolben ausgefahren. Je nach maximaler Längenänderung der Zylindereinheit wird von kurzhubigen oder langhubigen Zylindern gesprochen. Im Fahrzeugbau werden häufig kurzhubige Zylinder eingesetzt, beispielsweise als Teil der Servolenkung.

Bislang werden derartige kurzhubige Zylinder hergestellt, indem zunächst die Enden der späteren Zylindereinheit bearbeitet werden. Bei dieser so genannten Endenbearbeitung werden beispielsweise eine plane. Stirnfläche sowie gegebenenfalls alle Formelemente nahe der Stirnfläche (z.B. Gewinde, Ringnuten, Dichtsitze oder Einführfasen) durch Drehen hergestellt. Die Endenbearbeitung erfolgt in der Regel mittels Dreh- oder Fräsmaschine. In einem nachfolgenden Schritt wird der endenbearbeitete Rohling in einer Tiefbohrmaschine gespannt, mittels der die Zylinder-Innenfläche erzeugt wird, an der später der Kolben läuft. Nachteilig an dem bekannten Herstellungsverfahren ist, dass höchste Genauigkeiten nur schwer erreichbar sind.

Aus der US 4,184,794 A ist eine Schälvorrichtung bekannt, bei die als Tiefbohrwerkzeuge bezeichnete Schruppwerkzeuge, Schälmesser und Festwalzrollen aufweist. Mit diesem Werkzeug kann die Innenfläche des Zylinders fertig bearbeitet werden, zum Bearbeiten der Stirnseiten muss der Roh-Zylinder auf eine Drehmaschine umgespannt werden.

Aus der GB 748,620 ist eine Drehmaschine bekannt, mittels der die Zylinder-Innenfläche durch Drehen bearbeitet und anschließend der Zylinder-Rohling durch eine Bewegung einer Abdreheinheit senkrecht zur Drehachse der Drehmaschine abgedreht werden kann.

Aus der DE 27 23 622 A1 ist ein Schälwerkzeug bekannt, bei dem das Spülöl zum Entfernen der Späne aus dem Arbeitsraum zum Aktivieren und Deaktivieren der Schneidmesser verwendet wird.

Der Erfindung liegt die Aufgabe zugrunde, die Genauigkeit und die Wirtschaftlichkeit bei der Fertigung von Zylindereinheiten, insbesondere von kurzhubigen Zylindereinheiten, zu verbessern.

Die Erfindung löst das Problem durch ein Verfahren mit den Merkmalen von Anspruch 1 und durch eine Drehmaschine mit den Merkmalen des unabhängigen Sachanspruchs 4. Vorteilhafte Ausgestaltungen des Verfahrens bzw. der Drehmaschine sind in den Unteransprüchen angegeben.

Vorteilhaft an der Erfindung ist, dass die Endenbearbeitung und die Erstellung der Zylinder-Innenfläche in einer Aufspannung zu einer höheren Genauigkeit führen. Beim Umspannen sind Einbußen in der Genauigkeit weitgehend unvermeidbar, da Justagefehler auftreten. Bislang war eine Bearbeitung in einer Aufspannung nicht möglich. So war das Tiefbohren auf einer Drehmaschine nicht möglich, da das Tiefbohren eine Überflutungskühlung erfordert. Den dafür notwendigen Kühlschmierstofffluss vermögen Drehmaschinen jedoch nicht zu liefern. Gleichzeitig war es auch nicht möglich, die Endenbearbeitung auf einer Tiefbohrmaschine durchzuführen, da Tiefbohrmaschinen keine Schlitten aufweisen, mit denen ein Zerspanwerkzeug mit der notwendigen Genauigkeit auf die Stirnseite der entstehenden Zylindereinheit zugestellt werden kann.

Es ist ein weiterer Vorteil der vorliegenden Erfindung, dass die Fertigung von Zylindereinheiten mit weniger Aufwand ermöglicht wird. So entfällt das Umspannen, was zeitaufwändig ist. Des Weiteren entfällt die Notwendigkeit, zwei Maschinen vorzuhalten, da die Zylinderarbeit auf der Drehmaschine in aller Regel spanend endbearbeitet werden kann.

Im Rahmen der vorliegenden Beschreibung wird unter dem Zylinder insbesondere ein Bauteil verstanden, das nach der Bearbeitung Teil der Zylindereinheit ist. Der Zylinder könnte daher vor dem Schälen als ungeschälter Roh-Zylinder und nach dem Schälen und vor dem Glattwalzen als ungewalzter Roh-Zylinder bezeichnet werden. Nach dem Glattwalzen wird der Zylinder insbesondere um einen Kolben und einen Zylinderkopf zur Zylindereinheit ergänzt.

Es ist möglich, nicht aber notwendig, dass das Bearbeiten der Stirnfläche der Zylindereinheit zeitlich nach dem Glattwalzen und/oder dem Schälen erfolgt. Es ist möglich, dass zunächst die Stirnfläche sowie alle Formelemente nahe der Stirnfläche durch Drehen oder Fräsen bearbeitet werden und danach erst das Schälen durchgeführt wird. Zumindest theoretisch ist sogar denkbar, dass beides mit einem kombinierten Werkzeug simultan erfolgt. Ebenso ist es möglich, die Endenbearbeitung nach dem Schälen und Glattwalzen der Zylinderfläche vorzunehmen.

Unter dem Merkmal, dass das Schälen, das Glattwalzen und das Bearbeiten zumindest der Stirnfläche durch Drehen in einer Aufspannung durchgeführt werden, wird insbesondere verstanden, dass alle Formelemente nahe der Stirnfläche bearbeitet werden. Unter dem Drehen ist das spanende Bearbeiten gemeint.

Das Schälen der Zylinder-Innenfläche wird vorzugsweise mit einem Innen-Schälwerkzeug durchgeführt, das zwei oder mehr pendelnd angeordnete, ein- und ausfahrbare Schälmesser aufweist. Ein derartiges Innen-Schälwerkzeug hat den Vorteil, dass die erzeugte Oberfläche beim Herausfahren des Innen-Schälwerkzeugs nicht durch die Schälmesser beschädigt wird.

Das Schälen der Zylinder-Innenfläche des Zylinders erfolgt unter Verwendung eines Kühlschmierstoffs. Es kann sich dabei beispielsweise um einen wasserbasierten Kühlschmierstoff, eine Emulsion oder Mineralölbasis handeln.

Unter dem Merkmal, dass zum Betätigen des Steuerzylinders und zum Abtransportieren der Späne der gleiche Kühlschmierstoff verwendet wird, wird insbesondere verstanden, dass der Kühlschmierstoff in einem Kühlschmierstoffkreislauf geführt wird, so dass bei einem theoretischen, beliebig lange dauernden Prozess ein und derselbe Kühlschmierstoff wiederholt zum Einsatz kommt. Es ist möglich, nicht aber notwendig, dass das Betätigen des Steuerzylinders mit Kühlschmierstoff durchgeführt wird, der zu einem früheren oder späteren Zeitpunkt aufgrund der Konstruktion des Schälwerkzeugs mit Spänen in Kontakt kommen kann. Es ist vielmehr auch möglich, dass zum Betätigen des Steuerzylinders ein Druckfluid verwendet wird, das seinerseits vom Kühlschmierstoff mit Druck beaufschlagt wird. So ist es denkbar, dass eine Membran oder ein Trennkolben vorgesehen ist, die den Kühlschmierstoff von dem Druckfluid trennt, mittels dem der Steuerzylinder betätigt wird. Bei dem hier genannten Steuerzylinder handelt es sich selbstverständlich nicht um den Zylinder der herzustellenden Zylindereinheit. Statt des Wortes Steuerzylinder könnte auch das Wort Werkzeug-Steuerzylinder verwendet werden.

Es ist vorteilhaft, wenn der Kühlschmierstoff, mittels dem der Steuerzylinder betätigt wird, oder mittels dem ein Druckfluid zur Betätigung des Steuerzylinders mit Druck beaufschlagbar ist, aus derselben Leitung entnommen wird, in der der Kühlschmierstoff zu einer Kühlschmierstoffdüse transportiert wird, aus der der Kühlschmierstoff so abgebbar ist, dass beim Schälen entstehende Späne abtransportiert werden. In diesem Fall existiert bei theoretisch beliebig langem Prozessverlauf ein gedachtes Volumenelement an Kühlschmierstoff, das zumindest einmal den Steuerzylinder betätigt und zudem Späne abtransportiert hat.

Gemäß einer bevorzugten Ausführungsform umfasst das Schälen der Zylinder-Innenfläche ein Abtransportieren von Spänen mittels Kühlschmierstoffs, wobei der Kühlschmierstoff durch zumindest eine Kühlschmierstoffdüse abgegeben wird und unmittelbar vor dem Austritt aus der Kühlschmierstoffdüse unter einem Druck von zumindest 4 MPa steht. Ein derartiger Druck ist in der Regel notwendig, um die beim Schälen entstehenden Späne mit der auf Drehmaschinen verfügbaren geringen Kühlschmierstoffmenge sicher abtransportieren zu können. Kann der Abtransport der Späne nicht sichergestellt sein, besteht das Risiko eines so genannten Spänestaus, bei dem Werkzeug und Maschine überlastet werden.

Vorzugsweise beträgt beim Schälen der Zylinder-Innenfläche ein Kühlschmierstoff-Durchfluss, mittels dem Späne abtransportiert werden, von höchstens 100 Liter pro Minute, insbesondere höchstens 50 Liter pro Minute. Klassischerweise wird die Zylinder-Innenfläche durch Tiefbohren hergestellt, was eine Überflutungskühlung erfordert, also eine Kühlung bei geringem Druck und hohem Durchfluss. Durch die Schälbearbeitung sind geringere Kühlschmierstoff-Durchflüsse erreichbar, wenn mit höherem Druck gearbeitet wird. Drehmaschinen sind jedoch in der Regel nicht in der Lage, entsprechend hohe Kühlschmierstoffdrücke zu liefern. Dies gilt insbesondere für existierende Drehmaschinen, auf denen die große Mehrzahl an Zylindereinheiten hergestellt wird.

Vorzugsweise hat die Zylinder-Innenfläche eine Tiefe von höchstens 1,5 m. Bis zu einer solchen Tiefe hat das erfindungsgemäße Verfahren die größten Vorteile gegenüber dem Tiefbohren.

Eine erfindungsgemäße Drehmaschine besitzt vorzugsweise ein oder mehrere Spanwerkzeuge wie Drehwerkzeuge und/oder Fräswerkzeuge. Damit ist die Stirnseite und bevorzugt auch eine Randseite der Zylindereinheit mit hoher Genauigkeit bearbeitbar.

Vorzugsweise ist das Schälwerkzeug unabhängig vom Glattwalzwerkzeug einsetzbar. Zwar ist es erfindungsgemäß, dass ein kombiniertes Schäl-Glattwalzwerkzeug eingesetzt wird, derartige Werkzeuge sind jedoch aufwändig. Da die Zylindereinheit in einer Aufspannung fertig bearbeitet werden kann, ist es vorteilhafterweise möglich, das Schälwerkzeug unabhängig vom Glattwalzwerkzeug einsetzbar auszugestalten, so dass sich einfachere und damit robustere Werkzeuge einsetzen lassen.

Gemäß einer bevorzugten Ausführungsform weist das Schälwerkzeug zumindest eine Kühlschmierstoffdüse zum Abgeben von Kühlschmierstoff und/oder zumindest zwei hydraulisch betätigbare, zumindest auch in radialer Richtung zustellbare Schälmesserauf.

Gemäß einer bevorzugten Ausführungsform umfasst das Schälwerkzeug eine Kühlschmierstoff-Druckerhöhungseinheit, die einen Kühlschmierstoff-Einlass zum Verbinden mit einem Kühlschmierstoff-Anschluss einer Drehmaschine, eine Pumpe zum Erhöhen eines Kühlschmierstoffdrucks und einen Kühlschmierstoff-Auslass, der mit der Kühlschmierstoffleitung verbunden ist, aufweist. Bislang werden die meisten Zylindereinheiten auf Drehmaschinen hergestellt, deren Kühlschmierstoff-Versorgung nicht hinreichend stark dimensioniert ist, um einen zuverlässigen Spanprozess zu gewährleisten. Da im Rahmen der Erfindung die Späne durch einen Kühlschmierstoffstrahl mit hohem Druck und geringerem Durchfluss beseitigbar sind, kann eine bestehende Drehmaschine nachgerüstet werden, so dass sie Zylindereinheiten in nur einer Aufspannung bearbeiten kann, indem die Kühlschmierstoff-Druckerhöhungseinheit vorgesehen wird. Das Schälwerkzeug bildet zusammen mit der Kühlschmierstoff-Druckerhöhungseinheit einen Nachrüstsatz, so dass Drehmaschinen zur Herstellung von Zylindereinheiten in einer Aufspannung nachgerüstet werden können.

Der Kühlschmierstoff wird dann von zumindest einer Pumpe auf Druck gebracht. Unter günstigen Bedingungen können zwei Pumpen miteinander kombiniert eingesetzt werden, nämlich einmal die Kühlschmierstoffpumpe der Drehmaschine und nachfolgend die Pumpe der Kühlschmierstoff-Druckerhöhungseinheit.

Im Folgenden wird die Erfindung anhand der beigefügten Zeichnungen näher erläutert. Dabei zeigt
- Figur 1: eine perspektivische Ansicht eines Schälwerkzeugs,
- Figur 2: eine Ansicht von vorn auf das Schälwerkzeug gemäß Figur 1,
- Figur 3: einen Schnitt A-A gemäß Figur 2,
- Figur 4: einen Schnitt B-B gemäß Figur 2,
- Figur 5: einen Querschnitt entlang der Linie C-C gemäß Figur 3,
- Figur 6: eine schematische Ansicht einer erfindungsgemäßen Drehmaschine,
- Figur 7: eine schematische Ansicht einer zweiten Ausführungsform einer erfindungsgemäßen Drehmaschine und
- Figur 8: eine schematische Ansicht einer dritten Ausführungsform einer erfindungsgemäßen Drehmaschine.

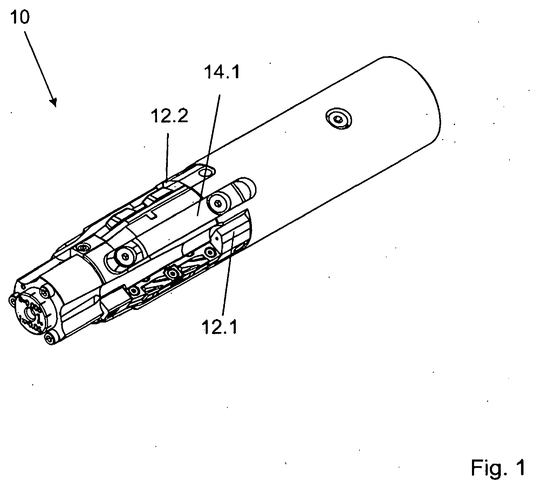

Figur 1 zeigt ein Schälwerkzeug 10, das eine erste Kühlschmierstoffdüse 12.1 und eine zweite Kühlschmierstoffdüse 12.2 sowie eine weitere, in Figur 1 nicht sichtbare Kühlschmierstoffdüse aufweist. Das Schälwerkzeug 10 besitzt zudem drei Schälmesser, von denen das Schälmesser 14.1 sichtbar ist. Das Schälmesser 14 (Bezugszeichen ohne Zählsuffix bezeichnen das Objekt also solches) ist an einem Grundkörper 16 pendelnd gelagert, und kann in radialer Richtung, also nach außen, und nach radial innen bewegt werden.

Die Kühlschmierstoffdüsen 12 sind so ausgebildet, dass sie einen Kühlschmierstoffstrahl abgeben, der zumindest überwiegend in axialer Richtung verläuft. Die Kühlschmierstoffdüsen 12 sind zudem so angeordnet, dass sie in den Spanraum des bezüglich einer Drehrichtung nachlaufenden Schälmessers gerichtet sind. Die von den Schälmessern erzeugten Späne werden dadurch vom Kühlschmierstoffstrahl erfasst und vom Schälwerkzeug 10 weg befördert.

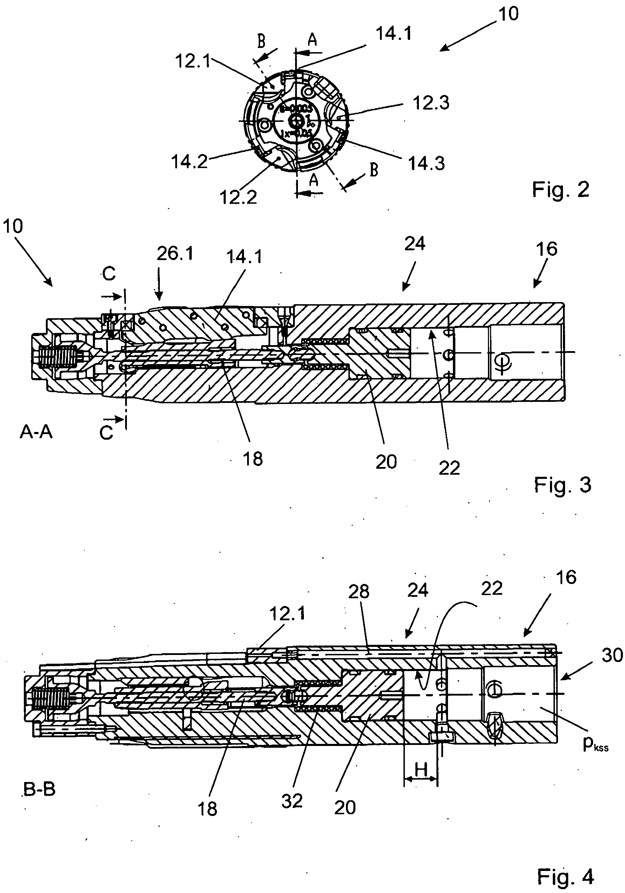

Figur 2 zeigt eine Ansicht von vorne auf das Schälwerkzeug 10. Es ist zu erkennen, dass das Schälwerkzeug 10 eine dreizählige Symmetrie aufweist. Die Schälmesser 14.1, 14.2, 14.3 sind um jeweils etwa 120° versetzt zueinander angeordnet. Der Grundkörper 16 ist zylinderförmig, wobei die Schälmesser 14 in eine erste Stellung, in der sie sich innerhalb einer gedachten Hülle um den Grundkörper 16 befinden, und in eine zweite Stellung, in der sie über diese gedachte Hülle hinausragen, bringbar sind.

Figur 3 zeigt einen Längsschnitt durch das Schälwerkzeug 10 gemäß des Schnittes A-A gemäß Figur 2. Es ist zu erkennen, dass das Schälmesser 14.1 über einen Schaltkonus 18 betätigbar angeordnet ist. Der Schaltkonus 18 wird von einem Kolben 20 bewegt, der in einer Zylinderbohrung 22 und zusammen mit dieser den Steuerzylinder 24 bildet.

Figur 3 zeigt den Steuerzylinder 24 und damit das Schälmesser 14.1 in seiner Arbeitsstellung, bei der eine Schneide 26.1 des Schälmessers 14 über den gedachten Hüllzylinder des Grundkörpers 16 hinausragt. In diesem Zustand drückt der Schaltkonus 18 das Schälmesser 14.1 gegen die Kraft einer in Figur 3 nicht eingezeichneten Feder nach außen.

Figur 4 zeigt einen Längsschnitt entlang der Linie B-B gemäß Figur 2. Es ist zu erkennen, dass, dass die Kühlschmierstoffdüse 12.1 über eine Kühlschmierstoffleitung 28 mit Kühlschmierstoff versorgbar ist. Der Kühlschmierstoff gelangt durch eine Kühlschmierstoff-Zuführung 30 in die Kühlschmierstoffleitung 28. Die Kühlschmierstoffleitung 28 ist mit der Zylinderbohrung 22 verbunden, so dass dann, wenn an die Kühlschmierstoffzuführung 30 ein erhöhter Kühlschmierstoffdruck p_{KSS} angelegt wird, die Axialkraft erhöht wird, die der Kolben 20 auf den Schaltkonus 18 ausübt.

Figur 4 zeigt einen Hub H, um den der Kolben 20 in die Zylinderbohrung 22 eindringt, wenn der Kühlschmierstoffdruck p_{KSS} unter einen Mindestdruck pₘᵢₙ sinkt. In diesem Fall drückt eine Feder 32 den Kolben 20 zurück, so dass der Schaltkonus 18 entlastet wird und das Schälmesser (vgl. Figur 3) von den nicht eingezeichneten Federn in seine Ruhelage zurückgedrückt wird, in dem es sich innerhalb der gedachten Zylinderhülle um den Grundkörper befindet.

Die Kühlschmierstoffleitung 28 versorgt nicht nur die Kühlschmierstoffdüse 12.1 mit Kühlschmierstoff, sondern auch die in den Figuren 3 und 4 nicht eingezeichneten Kühlschmierstoffdüsen 12.2. und 12.3.

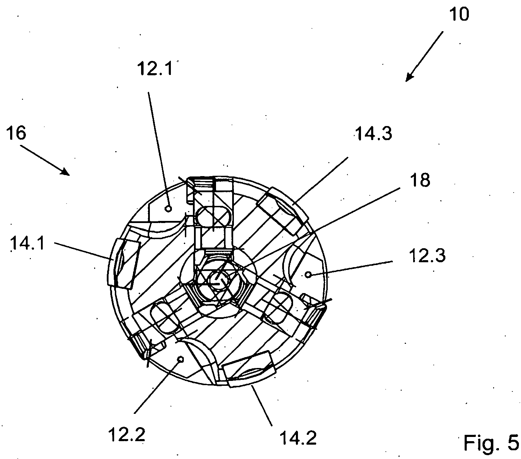

Figur 5 zeigt einen Querschnitt entlang der Ebene C-C gemäß Figur 3, in dem die Schälmesser 14 in der Einsatz-Anordnung sind, in der sie über den Hüllzylinder um den Grundkörper 16 hervorstehen.

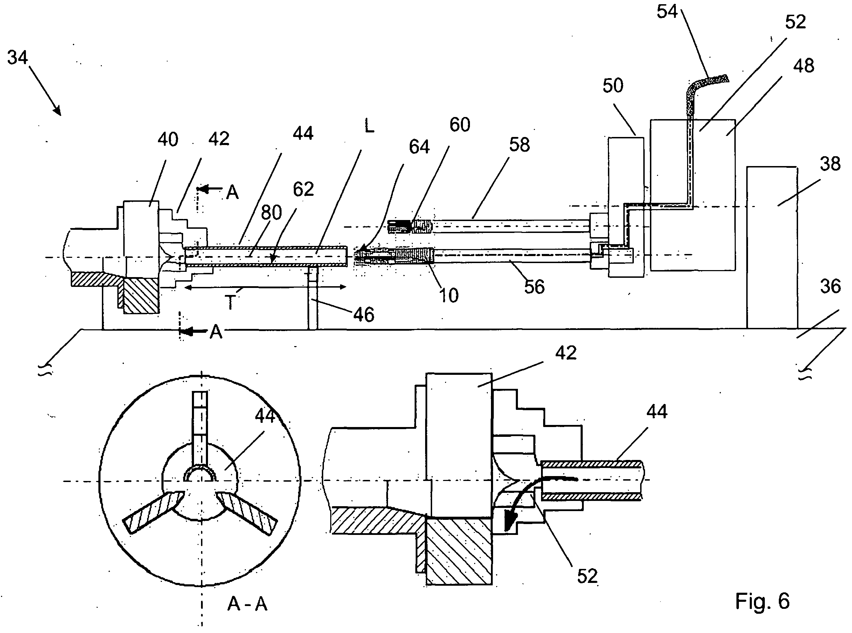

Figur 6 zeigt eine schematische Ansicht einer erfindungsgemäßen Drehmaschine 34 mit einem angedeuteten Maschinenbett 36, einem relativ zum Maschinenbett 36 automatisch positionierbaren Schlitten 38 und einer Spindel 40. An der Spindel 40 ist eine Werkstückspannvorrichtung 42 befestigt, mittels der ein Zylinder 44 spannbar ist. Der Zylinder 44 könnte auch als Roh-Zylindereinheit bezeichnet werden. Die Drehmaschine 34 besitzt zudem eine Lünette 46, mit der der Zylinder 44 bei der Rotation um seine Zylinder-Längsachse L abgestützt wird.

Die Drehmaschine 34 umfasst, wie bei einer bevorzugten Ausführungsform der Erfindung vorgesehen, einen Revolver 48, der eine drehbare Revolverscheibe 50 umfasst. Der Revolver 48 und die Revolverscheibe 50 sind so ausgebildet, dass Kühlschmierstoff 52 durch eine Zuführleitung 54 sowohl an eine erste Bohrstange 56 als auch an eine zweite Bohrstange 58 geliefert werden kann.

Sowohl die erste Bohrstange 56 als auch die zweite Bohrstange 58 können durch Drehung der Revolverscheibe 50 koaxial zur Maschinen-Längsachse ausgerichtet werden, die in Figur 6 mit der Zylinder-Längsachse L zusammenfällt. An der ersten Bohrstange 56 ist das Schälwerkzeug 10 befestigt, an der zweiten Bohrstange 58 ein Glattwalzwerkzeug 60.

Ein erfindungsgemäßes Verfahren wird dadurch durchgeführt, dass zunächst der Zylinder 44 mittels der Werkstückspannvorrichtung 42 drehfest relativ zur Spindel 40 befestigt wird. Danach wird eine Zylinder-Innenfläche 62 des Zylinders 44 mittels des Schälwerkzeugs 10 durch Rotation der Werkstückspannvorrichtung 42 bearbeitet. Es entsteht eine geschälte Zylinder-Innenfläche, die nachfolgend mittels des Glattwalzwerkzeugs 60 glattgewalzt wird. Dazu wird die Revolverscheibe 50 gedreht und dann das Schälwerkzeug 10 außer Eingriff und das Glattwälzwerkzeug 60 in Eingriff gebracht.

In einem nachfolgenden oder vorangehenden Schritt wird eine Stirnfläche 64 des Zylinders 44, beispielsweise mit einem Drehwerkzeug 78, spanend endbearbeitet. In weiteren Schritten wird in den Zylinder 44 ein Kolben eingeführt und mit einem Zylinderkopf abgedeckt, so dass sich eine Zylindereinheit ergibt.

Figur 6 zeigt in seinem unteren linken Teilbild einen Schnitt bezüglich der Schnittlinie A-A in dem oberen Teilbild. Es ist zu erkennen, dass eine dem Schälwerkzeug 10 abgewandte Öffnung des Zylinders 44 in einen offenen Hohlraum der Werkstückspannvorrichtung 42 mündet, so dass der Kühlschmierstoff austreten kann. Die Situation ist im unteren rechten Teilbild gezeigt. Der Kühlschmierstoff 52 verlässt den Zylinder 44 an seinem dem Schälwerkzeug 10 abgewandten Ende benachbart zur Werkstückspannvorrichtung 42.

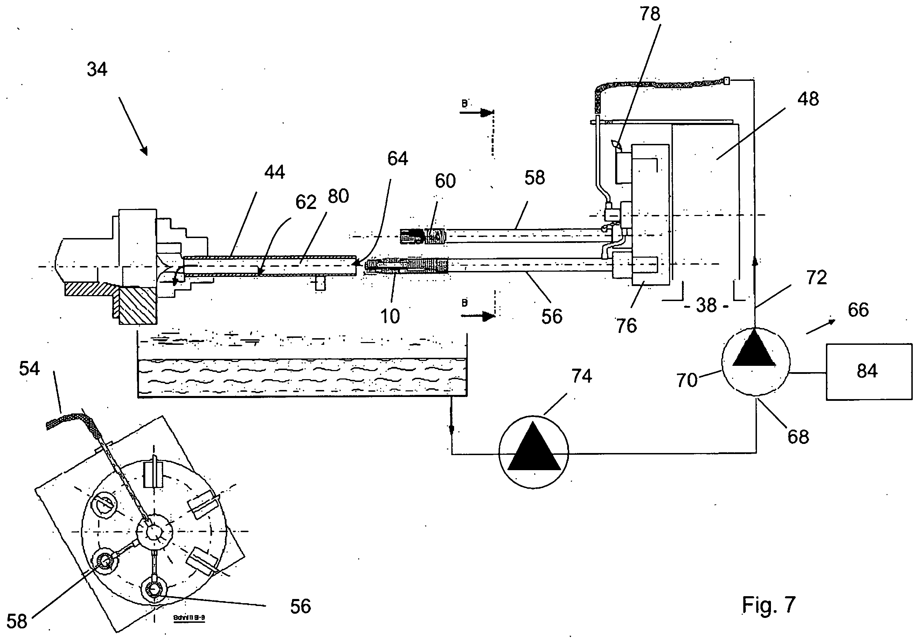

Figur 7 zeigt eine alternative Ausführungsform einer erfindungsgemäßen Drehmaschine 34 und eines Schälwerkzeugs 10, das eine Kühlschmierstoff-Druckerhöhungseinheit 66 aufweist. Diese besitzt einen Kühlschmierstoff-Einlass 68, eine Pumpe 70 und einen Kühlschmierstoff-Auslass 72, der mit der Kühlschmierstoffleitung 28 (vgl. Figur 4) verbunden ist. Der Kühlschmierstoff-Einlass 68 wird von der Kühlschmierstoff-Pumpe 74 der Drehmaschine 34 mit Kühlschmierstoff versorgt, die in der Regel nicht in der Lage ist, die benötigten hohen Drücke zu liefern.

Figur 7 zeigt zudem eine selektive Drehdurchführung 76, die eine bevorzugte Ausführungsform einer erfindungsgemäßen Drehmaschine 34 darstellt und die am Revolver 48 drehbar befestigt ist. Die Drehdurchführung 76 ist so ausgebildet, dass jeweils nur die aktive Bohrstange, im vorliegenden Fall die erste Bohrstange 56, mit Kühlschmierstoffdruck p_{KSS} beaufschlagt wird, nicht aber eine inaktive Bohrstange, im vorliegenden Fall die Bohrstange 58. Das Teilbild unten zeigt eine Draufsicht bezüglich der Ebene B-B.

Figur 7 zeigt zudem das Spanwerkzeug 78, im vorliegenden Fall in Form eines Drehmeißels, das mittels des Schlittens 38, an dem der Revolver 48 befestigt ist, so positionierbar ist, dass die Stirnfläche 64 des Zylinders 44 plan gedreht werden kann.

Beim Durchführen eines erfindungsgemäßen Verfahrens wird das Schälwerkzeug 10 in den Zylinder-Innenraum 80 des Zylinders 44 eingeführt. Danach wird der Kühlschmierstoffdruck p_{KSS} erhöht, so dass die Schälmesser 14 (vgl. Figuren 1 bis 4) ausfahren. Dann wird die Zylinder-Innenfläche 62 durch Schälen hergestellt. Die Späne werden mittels des Kühlschmierstoffs ausgetragen und gelangen in einen Kühlschmierstoffbehälter 82.

Nach Ende der Schälbearbeitung wird der Kühlschmierstoffdruck p_{KSS} abgesenkt, so dass die Schälmesser einfahren und in ihre Ruhelage kommen. Dann wird das Schälwerkzeug 10 herausgezogen und das Glattwalzwerkzeug 60 in den Zylinder-Innenraum 80 eingeführt. Nachfolgend wird die Zylinder-Innenfläche 62 glattgewalzt.

Eine erfindungsgemäße Drehmaschine 34 umfasst, wie in Figur 7 schematisch eingezeichnet ist, eine Steuereinheit 84, die ausgebildet ist zum Durchführen eines erfindungsgemäßen Verfahrens, insbesondere also zum Ansteuern des Schlittens 38, so dass dieser das Schälwerkzeug 10 in den Zylinder-Innenraum 80 einführt, zum Ansteuern der Spindel 40, so dass der Zylinder 44 sich dreht, und zum Erhöhen des Kühlschmierstoffdrucks p_{KSS}, so dass die Schälmesser 14 ausfahren. Die Steuereinheit 84 ist zudem ausgebildet zum nachfolgenden Verschieben des Schlittens 38, so dass das Schälwerkzeug 10 die Zylinder-Innenfläche 62 erzeugt und zum nachfolgenden Absenken des Kühlschmierstoffdrucks p_{KSS}, so das die Schälmesser 14 einfahren. Danach wird der Revolver 48 zum Wechseln auf das Glattwalzwerkzeug angesteuert und der Kühlschmierstoffdruck auf den für das Glattwalzwerkzeug geeigneten Kühlschmierstoffdruck gebracht. Nachfolgend wird der Schlitten 38 so angefahren, dass das Spanwerkzeug 78 die gewünschte Geometrie auf der Stirnfläche des Werkstücks erstellt.

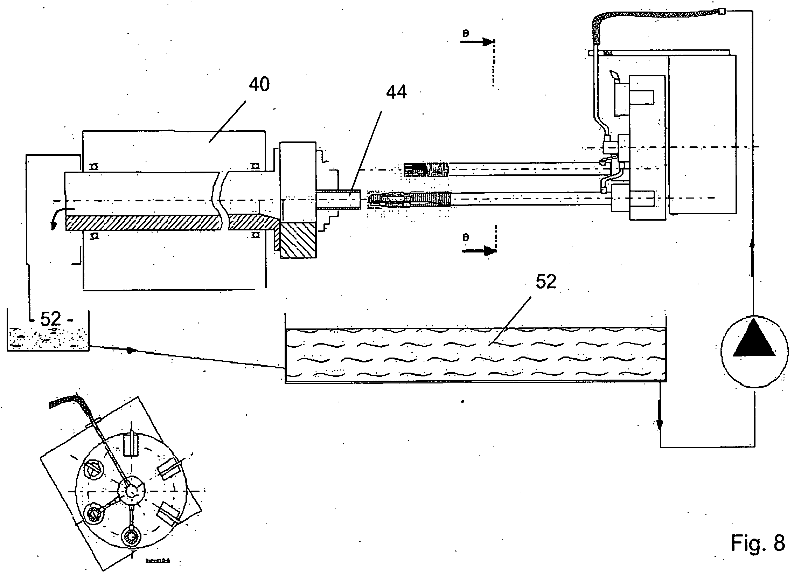

Figur 8 zeigt eine Abwandlung dahingehend, dass der Zylinder 44 bei der Bearbeitung durch die Spindel 40 verläuft, so dass der Kühlschmierstoff im Innern des Zylinders 44 abläuft und hinter der Spindel aufgefangen wird.

**Bezugszeichenliste**

| | | | |
|---|---|---|---|
| 10 | Schälwerkzeug | | |
| 12 | Kühlschmierstoffdüse | 50 | Revolverscheibe |
| 14 | Schälmesser | 52 | Kühlschmierstoff |
| 16 | Grundkörper | 54 | Zuführleitung |
| 18 | Schaltkonus | 56 | erste Bohrstange |
| | | 58 | zweite Bohrstange |
| 20 | Kolben | | |
| 22 | Zylinderbohrung | 60 | Glattwalzwerkzeug |
| 24 | Steuerzylinder | 62 | Zylinder-Innenfläche |
| 26 | Schneide | 64 | Stirnfläche |
| 28 | Kühlschmierstoffleitung | 66 | Kühlschmierstoff-Druckerhöhungseinheit |
| | | 68 | Kühlschmierstoff-Einlass |
| 30 | Kühlschmierstoffzuführung | | |
| 32 | Feder | 70 | Pumpe |
| 34 | Drehmaschine | 72 | Kühlschmierstoff-Auslass |
| 36 | Maschinenbett | 74 | Kühlschmierstoff-Pumpe |
| 38 | Schlitten | 76 | Drehdurchführung |
| | | 78 | Spanwerkzeug |
| 40 | Spindel | | |
| 42 | Werkstückspannvorrichtung | 80 | Zylinder-Innenraum |
| 44 | Roh-Zylindereinheit, Zylinder | 82 | Kühlschmierstoff-Behälter |
| 46 | Lünette | 84 | Steuereinheit |
| 48 | Revolver | | |
| | | p_{KSS} | Kühlschmierstoffdruck |
| | | H | Hub |
| | | Pmin | Mindestdruck |
| | | L | Zylinder-Längsachse |

## Patentansprüche

1. Verfahren zum Herstellen einer Zylindereinheit, mit den Schritten:
(a) Spannen eines Zylinders (44) an einer Werkstückspannvorrichtung (42) einer Drehmaschine (34),
(b) Schälen einer Zylinder-Innenfläche (62) des Zylinders (44) mittels eines Schälwerkzeugs (10), insbesondere durch Rotation der Werkstückspannvorrichtung (42), so dass eine geschälte Zylinder-Innenfläche (62) entsteht,
(c) Glattwälzen der geschälten Zylinder-Innenfläche (62) mittels eines Walzwerkzeugs (60), insbesondere durch Rotation der Werkstückspannvorrichtung (42), und
(d) Bearbeiten zumindest einer Stirnfläche (64) der Zylindereinheit, **dadurch gekennzeichnet, dass**
(e) das Schälen, das Glattwalzen und das Bearbeiten zumindest der Stirnfläche (64) in einer Aufspannung durchgeführt werden,
(f) wobei das Schälen der Zylinder-Innenfläche (62) die folgenden Schritte umfasst:
- Einführen eines Schälwerkzeugs (10) in einen Zylinder-Innenraum (80) des Zylinders (44),
- Ausfahren von zumindest zwei Schälmessern (14) durch Betätigen eines Steuerzylinders (24) und
- Spanen der Zylinder-Innenfläche (62) mittels der Schälmesser (14) unter Abtransportieren von entstehenden Spänen mittels Kühlschmierstoffs (52),
wobei zum Betätigen des Steuerzylinders (24) und zum Abtransportieren der Späne der gleiche Kühlschmierstoff (52) verwendet wird.

2. Verfahren nach Anspruch 1, **dadurch gekennzeichnet, dass**
- das Schälen der Zylinder-Innenfläche (62) ein Abtransportieren von Spänen mittels Kühlschmierstoffs (52) umfasst,
- wobei der Kühlschmierstoff (52) durch zumindest eine Kühlschmierstoffdüse (12) abgegeben wird und unter einem Druck (p_{KSS}) von zumindest 4 MPa steht.

3. Verfahren nach einem der vorstehenden Ansprüche, **dadurch gekennzeichnet, dass** ein Kühlschmierstoff-Durchfluss höchstens 100 Liter pro Minute beträgt, insbesondere höchstens 50 Liter pro Minute.

4. Drehmaschine (34) zum Durchführen eines Verfahrens nach einem der vorstehenden Ansprüche, mit
(i) einer Spindel (40),
(ii) einer Werkstückspannvorrichtung (42), die von der Spindel (40) antreibbar ist und ausgebildet ist zum Spannen einer Zylindereinheit (44), so dass die Zylindereinheit (44) um eine Zylinder-Längsachse (L) drehbar ist, und
(iii) einem Schlitten (38) zum Positionieren eines Spanwerkzeugs (78) auf eine vorgebbare Position relativ zu der Werkstückspannvorrichtung (42), so dass eine Stirnseite der Zylindereinheit (44) bearbeitbar ist,
**gekennzeichnet durch**
(iv) ein Schälwerkzeug (10), das
- zumindest eine Kühlschmierstoffdüse (12) zum Abgeben von Kühlschmierstoff (52),
- zumindest eine Kühlschmierstoffleitung (28), mittels der Kühlschmierstoff (52) zur Kühlschmierstoffdüse (12) leitbar ist,
- zumindest zwei pendelnd gelagerte und zumindest auch in radialer Richtung zustellbare Schälmesser (14) und
- einen Steuerzylinder (24), mittels dem die Schälmesser (14) ein- und ausfahrbar sind, aufweist,
- wobei der Steuerzylinder (24) über die Kühlschmierstoffleitung (28) mit Druck beaufschlagbar ist,
(v) ein Glattwalzwerkzeug (60) zum Glattwalzen der Zylinder-Innenfläche (62), das so angeordnet ist, dass die Zylinder-Innenfläche (62) der Zylindereinheit (44) **durch** Glattwalzen bearbeitbar ist.

5. Drehmaschine nach Anspruch 4, **gekennzeichnet durch** eine Kühlschmierstoff-Druckerhöhungseinheit (66), mit
- einem Kühlschmierstoff-Einlass (68) zum Verbinden mit einem Kühlschmierstoff-Anschluss einer Drehmaschine (34),
- einer Pumpe (70) zum Erhöhen eines Kühlschmierstoffdrucks (p_{KSS}) und
- einem Kühlschmierstoff-Auslass (72), der mit der Kühlschmierstoffleitung (28) verbunden ist.

6. Drehmaschine nach Anspruch nach einem der Ansprüche 4 oder 5, **dadurch gekennzeichnet, dass** das Schälwerkzeug (10) unabhängig vom Glattwalzwerkzeug (60) bewegbar ist.

7. Drehmaschine nach einem der vorstehenden Ansprüche 4 oder 6, **gekennzeichnet durch** eine Kühlschmierstoff-Versorgungseinheit, die eingerichtet ist zum Abgeben von Kühlschmierstoff (52) mit einem Druck (p_{KSS}) von zumindest 4 MPa.

8. Drehmaschine nach einem der vorstehenden Ansprüche 4 bis 7, **dadurch gekennzeichnet, dass** das Schälwerkzeug (10) und/oder das Glattwalzwerkzeug (60) auf einer Werkzeugwechselvorrichtung, insbesondere einem Revolver (48) angeordnet sind.

## Claims

1. A method for producing a cylinder unit, with the steps:
(a) clamping a cylinder (44) to a workpiece clamping device (42) of a lathe (34),
(b) skiving a cylinder inner surface (62) of a cylinder (44) by means of a skiving tool (10), in particular by rotating the workpiece clamping device (42), such that a skived cylinder inner surface (62) is formed,
(c) smooth rolling the skived cylinder inner surface (62) by means of a rolling tool (60), in particular by rotating the workpiece clamping device (42), and
(d) processing at least a front surface (64) of the cylinder unit, **characterised by** the fact that
(e) the skiving, the smooth rolling and the processing at least of the front surface (64) are carried out in one setting,
(f) the skiving of the cylinder inner surface (62) comprises the following steps:
- inserting a skiving tool (10) into a cylinder interior (80) of a cylinder (44),
- extending at least two skiving blades (14) by operating a control cylinder (24) and
- cutting the cylinder inner surface (62) by means of the skiving blades (14), as well as removing the resulting chips by means of a cooling lubricant (52),
wherein the same cooling lubricant (52) is used to operate the control cylinder (24) as is used to remove the chips.

2. The method according to claim 1, **characterised by** the fact that
- the skiving of the cylinder inner surface (62) comprises the removal of chips by means of the cooling lubricant (52),
- wherein the cooling lubricant (52) is released by at least one cooling lubricant nozzle (12) and is under a pressure (p_{KSS}) of at least 4 MPa.

3. The method according to one of the abovementioned claims, **characterised by** the fact that a cooling lubricant flow rate amounts to a maximum of 100 litres per minute, in particular a maximum of 50 litres per minute.

4. A lathe (34) to carry out a method according to one of the abovementioned claims with
(i) a spindle (40),
(ii) a workpiece clamping device (42), which can be driven by the spindle (40) and is configured to clamp the cylinder unit (44), such that the cylinder unit (44) can be turned about the longitudinal axis of the cylinder (L), and
(iii) a slide (38) for positioning the cutting tool (78) in a pre-determinable position relative to the workpiece clamping device (42), such that the face of the cylinder unit (44) can be processed,
**characterised by**
(iv) a skiving tool (10) with
- at least one cooling lubricant nozzle (12) to release cooling lubricant (52),
- at least one cooling lubricant pipe (28) by means of which the cooling lubricant (52) can be sent to the cooling lubricant nozzle (12),
- at least two skiving blades (14) that are mounted in a floating manner and can be moved at least in a radial direction and
- a control cylinder (24) by means of which the skiving blades (14) can be extended and retracted
- wherein the control cylinder (24) can be subjected to pressure via the cooling lubricant pipe (28),
(v) a smooth rolling tool (60) for smooth rolling the cylinder inner surface (62), which is set up such that the cylinder inner surface (62) of the cylinder unit (44) can be processed by smooth rolling.

5. The lathe according to claim 4, **characterised by** a unit for the raising of the cooling lubricant pressure (66) with
- a cooling lubricant inlet (68) which connects to the lathe's cooling lubricant port,
- a pump (70) for raising the cooling lubricant pressure (p_{KSS}) and
- a cooling lubricant outlet (72), which is connected to the cooling lubricant pipe (28).

6. The lathe according to one of the claims 4 or 5, **characterised by** the fact that the skiving tool (10) can be moved independently of the smooth rolling tool (60).

7. The lathe according to one of the abovementioned claims 4 or 6, **characterised by** a cooling lubricant supply unit, which is set up to release the cooling lubricant (52) with a pressure (p_{KSS}) of at least 4 MPa.

8. The lathe according to one of the abovementioned claims 4 to 7, **characterised by** the fact that the skiving tool (10) and/or the smooth rolling tool (60) are arranged on a tool switching device, in particular on the turret (48).

## Revendications

1. Procédé pour fabriquer une unité à cylindre, comprenant les étapes consistant à :
a) serrer un cylindre (44) sur un dispositif de serrage pour pièce à oeuvrer (42) d'une machine de tournage (34),
b) aléser une surface intérieure cylindrique (62) du cylindre (44) au moyen d'un outil d'alésage (10), en particulier par rotation du dispositif de serrage pour pièce à oeuvrer (42), de sorte qu'il en résulte une surface intérieure cylindrique alésée (62),
c) brunir la surface intérieure cylindrique alésée (62) au moyen d'un outil de brunissage (60), en particulier par rotation du dispositif de serrage pour pièce à oeuvrer (42), et
d) usiner au moins une surface frontale (64) de l'unité à cylindre, **caractérisé en ce que**
e) l'alésage, le brunissage et l'usinage au moins de la surface frontale (64) sont exécutés dans une seule prise,
f) dans lequel l'alésage de la surface intérieure cylindrique (62) inclut les opérations suivantes :
- introduction d'un outil d'alésage (10) dans un espace intérieur cylindrique (80) du cylindre (44),
- déploiement d'au moins deux couteaux d'alésage (14) par actionnement d'un cylindre de commande (24), et
- usinage de la surface intérieure cylindrique (62) au moyen des couteaux d'alésage (14) avec évacuation des copeaux produits au moyen d'un agent de refroidissement-lubrification (52),
dans lequel on utilise le même agent de refroidissement-lubrification pour l'actionnement du cylindre de commande (24) et pour l'évacuation des copeaux.

2. Procédé selon la revendication 1, **caractérisé en ce que**
- l'alésage de la surface intérieure cylindrique (62) inclut une évacuation des copeaux au moyen d'un agent de refroidissement-lubrification,
- dans lequel l'agent de refroidissement-lubrification (52) est distribué par au moins une buse d'agent de refroidissement-lubrification (12) et est sous une pression (P_{KSS}) d'au moins 4 MPa.

3. Procédé selon l'une des revendications précédentes, **caractérisé en ce qu'**un débit d'agent de refroidissement-lubrification s'élève au maximum à 100 1 par minute, en particulier au maximum à 50 1 par minute.

4. Machine de tournage (34) pour la mise en oeuvre d'un procédé selon l'une des revendications précédentes, comprenant
(i) une broche (40),
(ii) un dispositif de serrage pour pièce à oeuvrer (42), qui peut être entraîné par la broche (40) et qui est réalisé pour serrer une unité à cylindre (44) de sorte que l'unité à cylindre (44) est capable de tourner autour d'un axe longitudinal de cylindre (L), et
(iii) un chariot (38) pour positionner un outil d'alésage (78) à une position prédéterminée par rapport au dispositif de serrage pour pièce à oeuvrer (42), de sorte qu'une face frontale de l'unité à cylindre (44) est susceptible d'être usinée,
**caractérisée par**
(iv) un outil d'alésage (10), qui comprend
- au moins une buse pour agent de refroidissement-lubrification (12) pour distribuer un agent de refroidissement-lubrification (52),
- au moins un conduit pour agent de refroidissement-lubrification (28), au moyen duquel l'agent de refroidissement-lubrification (52) peut être amené à la buse pour agent de refroidissement-lubrification (12),
- au moins deux couteaux d'alésage (14), montés de façon pendulaire et susceptible d'être approchés au moins également en direction radiale, et
- un cylindre de commande (24) au moyen duquel les couteaux d'alésage (14) sont susceptibles d'être introduits et extraits,
- dans lequel le cylindre de commande (24) est susceptible d'être alimenté en pression via le conduit pour agent de refroidissement-lubrification (28),
(v) un outil de brunissage (60) pour brunir la surface intérieure cylindrique (62), qui est agencé de telle façon que la surface intérieure cylindrique (62) de l'unité à cylindre (44) est susceptible d'être oeuvrée par brunissage.

5. Machine de tournage selon la revendication 4, **caractérisée par** une unité de mise sous pression (66) pour agent de refroidissement-lubrification, comprenant
- une entrée pour agent de refroidissement-lubrification (68) à relier à un raccord pour agent de refroidissement-lubrification d'une machine de tournage (34),
- une pompe (70) pour augmenter la pression d'un agent de refroidissement-lubrification (P_{KSS}), et
- une sortie pour agent de refroidissement-lubrification (72), qui est reliée au conduit pour agent de refroidissement-lubrification (28).

6. Machine de tournage selon l'une des revendications 4 ou 5, **caractérisée en ce que** l'outil d'alésage (10) est déplaçable indépendamment de l'outil de brunissage (60).

7. Machine de tournage selon l'une des revendications 4 ou 6, **caractérisée par** une unité d'alimentation d'agent de refroidissement-lubrification, qui est conçue pour délivrer un agent de refroidissement-lubrification (52) avec une pression (P_{KSS}) d'au moins 4 MPa.

8. Machine de tournage selon l'une des revendications 4 à 7, **caractérisée en ce que** l'outil d'alésage (10) et/ou l'outil de brunissage (60) sont agencés sur un dispositif de changement d'outil, en particulier un agencement dit "revolver" (48).
